# EUROPÄISCHE PATENTANMELDUNG

(11) **EP 3 007 057 A1**
(43) Veröffentlichungstag der Anmeldung: **13.04.2016**
(21) Anmeldenummer: 15185599.6
(22) Anmeldetag: 17.09.2015
(51) Int. Cl.: G06F 3/12, G06K 15/02

(54) **VERFAHREN ZUR OPTIMIERUNG DER PRODUKTIONSABFOLGE**

(30) Priorität: 10.10.2014 DE 102014114731
(71) Anmelder: manroland web systems GmbH, 86153 Augsburg (DE)
(72) Erfinder: Elchlepp, Andreas, 86551 Aichach (DE); Reismüller, Franz, 86453 Dasing (DE)

(57) **Zusammenfassung**

Verfahren zum Optimieren der Produktionsabläufe von einer Mehrzahl einem Drucksystem zugewiesenen Druckaufträgen.

Werden einem spezifischen Drucksystem mehrere Druckaufträge zugewiesen, so kann zwar jeder Druckauftrag für sich wirtschaftlich auf dem speziellen Drucksystem produziert werden, aber eine wirtschaftlich optimale Abarbeitung der Gesamtheit der in einem definiertem Zeitintervall abzuarbeitenden Druckjobs ist dadurch nicht sichergestellt.

Zur Erhöhung der Effizienz der Abarbeitung einer Mehrzahl von Druckaufträgen werden die dem Drucksystem zugewiesenen Druckaufträge in ihrer Reihenfolge und somit der Abfolge der Abarbeitung automatisiert derart geordnet, dass die dem Drucksystem zugewiesenen Druckaufträge hinsichtlich mindestens einem Sortierungskriterium optimiert produziert werden können.

Das Verfahren ist anwendbar zum Sortieren von Druckaufträgen sowohl für Druckform-variable Druckverfahren, wie beispielsweise das Inkjet-Verfahren oder beispielsweise tonerbasierten Digitaldruckverfahren als auch für Nicht-Druckformvariable Druckverfahren wie beispielsweise der Offset-Druck, der Tiefdruck, der Hochdruck, der Flexodruck etc. sowie für alle und all die vorgenannten Druckverfahren auch sowohl für Bogen- und/oder Rollen-verarbeitenden Drucksysteme.

## Beschreibung

Die Erfindung betrifft ein Verfahren zum Optimieren der Produktionsabläufe von einer Mehrzahl einem Drucksystem zugewiesenen Druckaufträgen, wobei die dem Drucksystem zugewiesenen Druckaufträge in ihrer Reihenfolge und somit in der zeitlichen Abfolge der Abarbeitung automatisiert derart geordnet werden, dass die dem Drucksystem zugewiesenen Druckjobs hinsichtlich mindestens einem Kriterium optimiert produziert werden können.

Aus dem Stand der Technik ist zur optimierten Abarbeitung von Druckaufträgen unter der DE10 2013 102 756 A1 ein Verfahren bekannt, mit welchem ein Druckauftrag in Abhängigkeit von den Produktionsparametern entweder einem Nicht-Druckform-variablen oder Druckform-variablen Drucksystem zugewiesen wird, um eine möglichst wirtschaftliche Abarbeitung des jeweiligen Druckauftrages sicherzustellen.

Werden jedoch einem spezifischen Drucksystem mehrere Druckaufträge, welche auch als Druckjobs bezeichnet werden, zugewiesen, oder ergibt sich die Abarbeitung mehrerer Druckaufträge durch ein Drucksystem per se, beispielsweise weil in der Druckerei nur ein Drucksystem verfügbar ist oder weil die Abarbeitung verschiedener Druckaufträge nur mit einem speziellen Drucksystem möglich ist, so kann zwar jeder Druckauftrag für sich wirtschaftlich auf dem speziellen Drucksystem produziert werden, aber eine wirtschaftlich optimale Abarbeitung der Gesamtheit der in einem definiertem Zeitintervall abzuarbeitenden Druckjobs ist dadurch noch nicht sichergestellt.

Denn die einzelnen von einem Drucksystem abzuarbeitenden Druckaufträge können unterschiedliche Produktionsparameter wie unterschiedliche Bahnbreiten, Bedruckstoffarten, Farbigkeiten, Seitenzahlen, Endformate, Falzarten etc. aufweisen, so dass in der Regel von Druckjob zu Druckjob Rüstvorgänge erforderlich sind, welche einen Maschinenstillstand zur Folge haben und die Verfügbarkeit des Drucksystems teilweise erheblich einschränken.

Zwar können die auf einem Drucksystem zu produzierenden Druckjobs von einem Disponenten manuell hinsichtlich der zeitlichen Abfolge derart geordnet werden, dass die Umrüstvorgänge zwischen den einzelnen Druckjobs reduziert werden können. Allerdings ist ein manuelles Ordnen insbesondere bei Druckform-variablen Drucksystemen und/oder verschiedenartigen Drucksystemen aufgrund der kleinen, dennoch wirtschaftlich zu produzierenden Auflagenhöhe und somit einer sehr hohen Anzahl von Druckaufträgen pro Tag nicht mehr effizient möglich.

Der Erfindung liegt daher die Aufgabe zugrunde, eine Lösung zu schaffen, mit welcher die einem Drucksystem zugewiesenen Druckjobs automatisch beziehungsweise automatisiert, das heißt ohne manuelle Eingriffe eines Bedieners oder Disponenten bezüglich der Sortierung, in ihrer zeitlichen Abfolge beziehungsweise in eine nach bestimmten Kriterien geordnete Abarbeitung so zu sortieren, dass diese Gesamtzahl der Druckaufträge wirtschaftlich optimal produziert werden kann.

Bei dem erfindungsgemäßen Verfahren wird diese Aufgabe dadurch gelöst, dass die dem Drucksystem zugewiesenen Druckaufträge in ihrer Reihenfolge und somit in der Abfolge der Abarbeitung automatisiert derart geordnet werden, dass die dem Drucksystem zugewiesenen Druckaufträge hinsichtlich mindestens einem Sortierungskriterium optimiert produziert werden können.

Aus dem Stand der Technik sind Drucksysteme bekannt, die aus einer Druckeinrichtung sowie mindestens aus einer Versorgung und Entsorgung des Bedruckstoffes sowie diverser Hilfskomponenten wie zum Beispiel Trockeneinrichtungen als auch gegebenenfalls aus einer zugehörigen Nachverarbeitungseinrichtung wie beispielsweise einer Querschneidvorrichtung, einer Falzvorrichtung und/oder einer Sammel- und Weiterverarbeitungseinrichtung bestehen. Hierbei ist es für die vorliegende Erfindung unbedeutend, ob als Bedruckstoff ein bahnförmiger Stoff in Form einer Rolle zugeführt wird, oder ob als Bedruckstoff bogenförmige Bedruckstoffe der Druckeinrichtung zugeführt werden.

Ebenfalls ist es für die Erfindung unbedeutend, ob es sich bei der Druckeinrichtung bzw. dem Drucksystem um ein Druckform-variables Drucksystem bzw. Druckeinrichtung handelt, wie beispielsweise eine Digitaldruckmaschine, welche zum Beispiel den Bedruckstoff mit dem Inkjet-Verfahren oder tonerbasierten Digitaldruckverfahren bedruckt, oder ob es sich um eine sogenannte Nicht-Druckformvariable Druckmaschine wie beispielsweise eine Offset- oder Tiefdruckmaschine handelt.

Allerdings wird an dieser Stelle angemerkt, dass das erfindungsgemäße Verfahren insbesondere für Druckform-variable Drucksysteme von Interesse ist, da diese Drucksysteme systembedingt vorzugsweise für Klein- und Kleinstauflagen zum Einsatz kommen. Somit werden üblicherweise bei Druckform-variablen Drucksystemen in der gleichen Zeiteinheit mehr Druckaufträge abgearbeitet, als bei NichtDruckform-variablen Drucksystemen. Somit haben insbesondere Druckform-variable Drucksysteme aufgrund der in der Regel höheren Anzahl von Druckaufträgen zumeist einen höheren Nutzen an einer automatischen Sortierung als Nicht-Druckform-variable Drucksysteme.

Ein Druckauftrag oder auch Druckjob genannt, ist ein Druckprodukt wie ein Heft oder ein Flyer oder ein Teil eines Druckproduktes wie eine Signatur eines Magazins oder Katalogs, wenn das endgültige Druckprodukt nicht in einem Produktionsschritt erzeugt werden kann. Nicht-Druckform-variable Drucksysteme sind aufgrund des begrenzten Umfanges und der begrenzten Bedruckstoffbreite in der Seitenanzahl begrenzt, die mit einem Druckauftrag abgearbeitet werden können. Ein Druckauftrag ist durch die Druckauftragsdaten beschrieben, welche die Eigenschaften als auch die Druckinhalte aufweisen. Die Druckauftragsdaten setzen sich somit aus den Produktionsparametern wie beispielsweise der Auflagenhöhe, dem Format des Druckproduktes, der Bedruckstoffbreite, der Bedruckstoffgrammatur, der Falzart oder auch Kunden- oder Logistik-Informationen wie Lieferadressen, Lieferdatum, Verpackungseinheit etc. und den Druckinhalten zusammen. Die Druckinhalte werden Nicht-Druckform-variablen Drucksystemen in Form der Druckformen wie beispielsweise der Druckplatten zugeführt, bei Druckform-variablen Drucksystemen werden diese als digitale Daten jedem Druckauftrag zugewiesen.

Die einem Drucksystem zugewiesenen Druckaufträge werden zumeist in der Form abgearbeitet und somit sortiert, wie diese dem entsprechenden Drucksystem zugewiesen werden oder wie diese in der zeitlichen Abfolge auszuliefern sind. Aufgrund der unterschiedlichen Produktionsparameter ist es bei einer derartigen zeitlichen Abfolge der Abarbeitung der Druckaufträge sehr wahrscheinlich, dass durch die unterschiedlichen und vielzähligen Produktionsparameter zwischen vielen Druckaufträgen längere Rüstvorgänge erforderlich sind, beispielsweise um den Bedruckstoff auszutauschen, die Farbigkeit umzustellen oder um die Falzvariante umzustellen.

So kann es bei ungenügender Sortierung der Druckaufträge zu unverhältnismäßig langen Stillstandszeiten infolge von Umrüstvorgängen kommen, zu welchen zumeist auch manuelle Bedienereingriffe erforderlich sind, was zudem den erforderlichen Personalbedarf erhöht.

Eine manuelle Sortierung der Druckaufträge durch einen Disponenten ist zwar grundsätzlich möglich, allerdings kann bei einer hohen Anzahl von abzuarbeitenden Druckaufträgen aufgrund der vielzähligen und vielfältigen Produktionsparameter eine durchgängige und nachhaltige sowie systematische Optimierung hiermit nicht sichergestellt werden, zumal verschiedene oder kombinierbare Sortierungskriterien möglich oder erforderlich sind. Da häufig dem Drucksystem eine mehr oder weniger komplexe Nachverarbeitung wie beispielsweise eine Sammel- oder Abstapelstation, eine Schneidestation etc., welche in der Regel auf das Endformat des Druckproduktes einzustellen sind, nachgeschaltet sind, sind diese sowie deren relevante Produktionsparameter für eine nachhaltige Optimierung mit zu berücksichtigen, was eine manuelle Sortierung zusätzlich erschwert.

Ferner bestehen unterschiedliche Sortierungskriterien: so können die Druckaufträge nach wirtschaftlichen Aspekten der reinen Druckproduktion hin optimiert werden, das heißt, dass in der Regel die Gesamtheit der Stillstands- und Umrüstzeiten für beispielsweise Bedruckstoffwechsel, Formatumstellungen auch der dem Drucksystem nachgeordneten Nachverarbeitung, der Umstellung des Falzes oder der Bahnführung etc. minimiert werden.

Es kann unter Umständen auch sinnvoll sein, die Druckaufträge beispielsweise nach logistischen Aspekten hin zu optimieren. Hierbei werden nicht zwingend die Abläufe rein auf das Drucksystem hin optimiert, sondern in diesem Fall werden beispielsweise auch Aspekte des Versandraumes bzw. des Versandes berücksichtigt. Werden beispielsweise für verschiedene Kunden jeweils unterschiedliche Druckprodukte in variabler Anzahl disponiert, so kann es durchaus Sinn machen, die Druckaufträge so zu sortieren, dass alle für einen einem spezifischen Kunden zugewiesenen Druckprodukte in zusammenhängender Abfolge produziert werden, so dass hierdurch die dem Druck- und Nachverarbeitungsprozess nachgelagerte Logistik wesentlich vereinfacht wird. Dies kann insbesondere bei Druckform-variablen Drucksystemen Sinn machen, da hierbei zumeist keine Maschinenstillstände für den Wechsel der Druckdaten bzw. Sujets erforderlich sind.

Abhängig von der Funktionsweise und Konfiguration des Drucksystems und gegebenenfalls der nachgeordneten Nachverarbeitung sind weitere Kriterien wie die Farbigkeit, die Druckqualität oder beispielsweise die Konfiguration der Nachverarbeitung bei verstellbaren Konfigurationen dieser möglich.

Bei einer vorzugsweisen Ausgestaltung der Erfindung kann vom Bediener zwischen unterschiedlichen vordefinierten Sortierungskriterien ausgewählt werden, da diese in der Bedieneinheit abgespeichert und in einer vorteilhaften Ausgestaltung konfigurierbar ausgeführt sind.

Wenn mehrere Sortierungskriterien in sich nicht widersprüchlich sind, so können bei Bedarf auch eine Mehrzahl von Suchkriterien mit entsprechender Priorisierung angewählt werden.

Zur Sortierung der Druckaufträge werden die Produktionsparameter der zu sortierenden Druckaufträge aufgeteilt und entsprechend dem mindestens einen Sortierkriterium analysiert. Hierzu werden beispielsweise die Druckaufträge mit den entsprechenden Produktionsparametern matrixartig aufgespannt, die jeweiligen Druckaufträge werden in ihren entsprechenden Produktionsparametern dahingehend verglichen und so sortiert, dass sich zwischen jedem vorhergehenden und diesem nachfolgenden Druckauftrag entweder keine oder möglichst geringe Unterschiede der Produktionsparameter, insbesondere der Stillstands-relevanten Produktionsparameter, ergeben. Da kein Unterschied zwischen den Produktionsparametern aufeinanderfolgender Druckaufträge keine Produktionsunterbrechung für Rüstvorgänge bedeutet - mit Ausnahme des Wechsels der mindestens einen Druckform bei Nicht-Druckform-variablen Drucksystemen - kann somit eine Sortierung der Druckaufträge mit möglichst geringem Rüstzeitanfall und in der Regel mit einem möglichst geringen Bedarf an Bedienpersonal erzielt werden.

Ferner kann das Verfahren und die hierfür gestaltete Vorrichtung auch dahingehend ausgebildet werden, dass die Druckaufträge nicht nur miteinander verglichen und in der Form sortiert werden, dass sich jeweils kein oder ein möglichst geringer Unterschied zwischen den Produktionsparametern ergibt, sondern dass bei entsprechend ausgeprägtem Unterschied zwischen spezifischen Produktionsparametern eine Änderung bzw. Anpassung der Produktionsparameter vorgeschlagen wird, um die Anzahl der erforderlichen Rüstvorgänge und somit die Gesamtheit der Rüstzeit zu minimieren. Dies macht beispielsweise bei nicht allzu stark abweichenden Bedruckstoffbreiten Sinn, insbesondere wenn beispielsweise der etwas größere Beschnitt bei größerer Bahnbreite als erforderlich einen kleineren wirtschaftlichen Nachteil im Vergleich zu einem zusätzlichen Rüstvorgang darstellt.

Bevorzugte Weiterbildungen der Erfindung ergeben sich aus den Unteransprüchen und der nachfolgenden Beschreibung. Verschiedene Ausführungsbeispiele der Erfindung werden, ohne hierauf beschränkt zu sein, an Hand der Zeichnungen näher erläutert. Dabei zeigt:
- Fig. 1a: eine Abfolge von Druckaufträgen ohne bzw. vor der Sortierung nach wirtschaftlich optimalen Aspekten;
- Fig. 1b: eine Abfolge von Druckaufträgen nach der Sortierung nach wirtschaftlich optimalen Aspekten für ein Druckform-variables Drucksystem;
- Fig. 1c: eine Abfolge von Druckaufträgen nach der Sortierung nach wirtschaftlich optimalen Aspekten für ein Nicht-Druckform-variables Drucksystem;
- Fig. 2: Matrix der Produktionsparameter über die entsprechenden zu sortierenden Druckaufträgen;

Das nachfolgende Ausführungsbeispiel wird anhand jeweils eines Druckformvariablen und eines Nicht-Druckform-variablen Drucksystems mit integrierter Falzvorrichtung dargestellt, wobei an dieser Stelle ausdrücklich darauf hingewiesen wird, dass dieses mit entsprechenden Anpassungen auch auf Bogenverarbeitende Drucksysteme übertragen werden kann.

Das Druckform-variable Drucksystem ist beispielsweise in der Form ausgeführt, wie in den Schriften EP 2 308 681 A2 oder DE 10 2012 103 729 A1 beschrieben.

Nicht-Druckform-variable Rollendrucksysteme wie Rollen-Offset-, Rollen-Tiefdruck- oder beispielsweise Rollen-Flexodruckmaschinen sind aus dem Stand der Technik für einen Fachmann hinlänglich bekannt.

Der Einfachheit halber wird nachfolgend das Verfahren am Beispiel von fünf Druckaufträgen mit einer jeweils überschaubaren Anzahl von zur Sortierung betrachteten Produktionsparametern erläutert. Es ist selbsterklärend, dass mit einem automatisierten Verfahren sowohl die Anzahl der zu sortierenden Druckaufträge als auch die Anzahl der zu betrachtenden Produktionsparameter und Sortierungskriterien beliebig erweitert werden kann.

Druckjob 10-1 ist ein vierfarbiger 16-Seiter im A4-Format mit den Endabmessungen 299 x 210 mm, gedruckt auf einem Papier mit einer Grammatur von 80 g/m²; aus der Produktgröße und der Seitenzahl ergibt sich beispielsweise eine Bahnbreite von 840 mm.

Druckjob 10-2 ist ein vierfarbiger 24-Seiter im A4-Format mit den Endabmessungen 290 x 205 mm, gedruckt auf einem Papier mit einer Grammatur von 80 g/m²; aus der Produktgröße und der Seitenzahl ergibt sich beispielsweise eine Bahnbreite von 820 mm.

Druckjob 10-3 ist ein einfarbiger 32-Seiter im A5-Format mit den Endabmessungen 210 x 150 mm, gedruckt auf einem Papier mit einer Grammatur von 60 g/m²; aus der Produktgröße und der Seitenzahl ergibt sich beispielsweise eine Bahnbreite von 900 mm.

Druckjob 10-4 ist ein vierfarbiger 8-Seiter im A4-Format mit den Endabmessungen 299 x 210 mm, gedruckt auf einem Papier mit einer Grammatur von 80 g/m²; aus der Produktgröße und der Seitenzahl ergibt sich beispielsweise eine Bahnbreite von 840 mm.

Druckjob 10-5 ist ein vierfarbiger 4-Seiter im Format kleiner A4 mit den Endabmessungen 280 x 190 mm, gedruckt auf einem Papier mit einer Grammatur von 100 g/m²; aus der Produktgröße und der Seitenzahl ergibt sich beispielsweise eine Bahnbreite von 760 mm.

Die Produktionsplanungs- und -Steuerungsvorrichtung bzw. -system, welches zur Durchführung des erfindungsgemäßen Verfahrens erforderlich ist, weist eine Annahmeschnittstelle zur Annahme von den die Druckaufträge repräsentierenden Druckauftragsdaten 11 und somit der zur Analyse und Sortierung relevanten Produktionsparameter 12 auf. Bei solchen Druckauftragsdaten kann es sich beispielsweise um die Ausgabedaten eines Produktionsplanungssystems handeln. Die Annahmeschnittstelle ist beispielsweise als gewöhnliche Netzwerkschnittstelle ausgebildet, könnte aber auch beispielsweise über eine feste Verdrahtung oder als reine Software-Schnittstelle ausgebildet sein.

Das Produktionsplanungs- und -steuerungssystem weist ferner eine als Sortierungseinrichtung ausgebildete Recheneinrichtung mit entsprechender Speichereinrichtung auf, welche zur Analyse und zur Sortierung der im Ablauf zu sortierenden bzw. zu optimierenden Druckaufträge 10 ausgebildet ist.

Ferner verfügt die Produktionsplanungs- und -Steuerungsvorrichtung über eine Eingabeeinheit, mittels welcher sowohl Produktionsparameter eingetragen, abgeändert oder korrigiert werden können. Darüber hinaus können mit der Eingabeeinheit auch die Sortierungskriterien eingegeben, angepasst bzw. angewählt werden.

Desweiteren verfügt die Produktionsplanungs- und -Steuerungsvorrichtung über eine Anzeigevorrichtung, mittels welcher die zu analysierenden Druckaufträge 10, die den Druckaufträgen 10 zugehörigen Druckauftragsdaten 11 in ursprünglicher und optimierter Abfolge mit entsprechenden Zusatzhinweisen für den Bediener bzw. den Disponenten visualisiert werden können. Es versteht sich von selbst, dass derartige Informationen auch abgespeichert, ausgedruckt oder in andere Datenformate konvertiert werden.

An dieser Anzeigevorrichtung werden beispielsweise auch die Produktionsparameter 12 angezeigt, für die in einer besonders vorteilhaften Weise der Erfindung vom Produktionsplanungs- und -Steuerungssystem eine Anpassung der Produktionsparameter 12 selbständig durchgeführt wurde oder eine Änderung dieser zur weiteren Optimierung der Gesamt-Produktionsabläufe vorgeschlagen wird. Im Falle, dass das Steuerungssystem Änderungen vorschlägt, kann diese vom Bediener des Steuerungssystems mittels einer der Eingabeeinheiten angenommen oder abgelehnt werden.

Nach Durchführung des erfindungsgemäßen Verfahrens zur Optimierung der Produktionsabfolge werden die entsprechend geordneten Auftragsdaten an eine weitere Steuerungsvorrichtung, welche zur Steuerung der Abarbeitung der Druckaufträge 10 der entsprechenden Druckmaschine dient, übertragen.

Diese angeführten, unterschiedlichen Steuerungssysteme können hardwaremäßig auch in einem einzigen Rechner verbaut werden, so dass die jeweiligen Funktionen lediglich durch verschiedene Steuerungsmodule abgebildet werden.

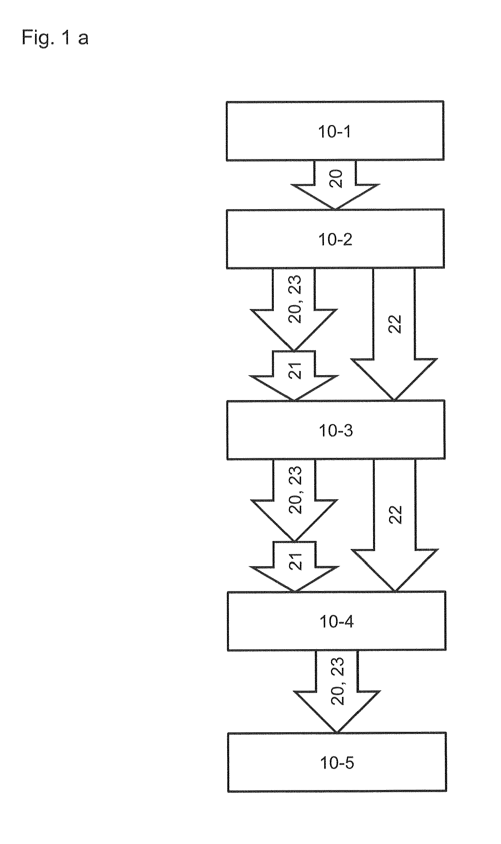

Ohne eine weitergehende Sortierung der Reihenfolge dieser Druckaufträge / Druckjobs 10-1 bis 10-5 ergeben sich aufgrund der vielzähligen erforderlichen Rüstvorgänge gemäß Fig. 1a. Denn nach Fertigstellung des Druckauftrages 10-1 ist für die Produktion des Druckauftrages 10-2 mindestens der Bedruckstoff zu tauschen, um den Wechsel der Bedruckstoffbreite 20 sicherzustellen. Aufgrund des anderen Formates ergeben sich gegebenenfalls noch zusätzliche Einstellungen am Falzwerk oder insbesondere an den diesem nachgelagerten Nachverarbeitungseinrichtungen wie beispielsweise Stapel- oder Sammeleinrichtung.

Nach Fertigstellung des Druckauftrages 10-2 muss - abhängig von der Ausführung des Falzwerkes - das Falzformat dieses geändert werden, wofür häufig erforderlich ist, den Bedruckstoff aus dem Falzwerk zu entfernen, was manuelle Eingriffe erfordert. Gegebenenfalls muss auch das Format des Falzwerkes und der nachgelagerten Nachverarbeitung auf die neue Produktgröße angepasst werden. Ferner kann der Wechsel der Farbigkeit von einem vierfarbigen auf einen einfarbigen Druck abhängig von der Art der Druckeinrichtung einen Rüstvorgang, mindestens jedoch einen Maschinenhalt erfordern, auch bei Druckform-variablen Druckeinrichtungen. Zusätzlich muss noch in jedem Fall der Bedruckstoff getauscht werden, da für den Druckauftrag 10-3 sowohl eine andere Bedruckstoffbreite als auch eine andere Papiergrammatur erforderlich ist. Der Wechsel der Bedruckstoffbreite 20 und die Umstellung der Grammatur des Bedruckstoffes 23 erfordert in den meisten Fällen einen manuellen Bedienereingriff und somit entsprechend lange Stillstands- bzw. Umrüstzeiten, desweiteren können in der Regel derartige manuelle Eingriffe wie den Wechsel des Bedruckstoffes und die Umstellung des Falzwerkes nur sequentiell und nicht zeitgleich ausgeführt werden, zumindest wenn man von einer wirtschaftlich vertretbaren Maschinenbesetzung ausgeht. Die Umstellung der Farbigkeit 22 kann zumeist parallel zu den vorher beschriebenen Rüstvorgängen erfolgen.

Nach Fertigstellung des Druckauftrages 10-3 und Wechsel auf den Druckauftrag 10-4 sind dann ebenfalls wieder die gleichen Rüstvorgänge mit den mehr oder weniger gleichen Stillstandszeiten und Personalbedarfen erforderlich, wie beim Wechsel von Druckjob 10-2 auf 10-3.

Beim nachfolgenden Wechsel von Druckjob 10-4 auf Druckjob 10-5 ist zum Wechsel der Bedruckstoffbreite 20 und der Umstellung der Grammatur mindestens ein Wechsel des Bedruckstoffes erforderlich, gegebenenfalls müssen - abhängig von der Maschinen- und Falzwerk-Konfiguration auch noch das Falzwerk umgestellt sowie aufgrund der unterschiedlichen Produkt-Endgröße dem Falzwerk nachgelagerte Komponenten eingestellt oder angepasst werden.

Dieses Beispiel verdeutlicht, dass bei nicht-optimierter Abarbeitung von Druckaufträgen 10 teilweise sehr zeit- und personalaufwändige Umrüstvorgänge erforderlich sind, welche die Verfügbarkeit, die Produktivität und somit die Wirtschaftlichkeit eines derartigen Systems deutlich einschränken.

Werden jedoch die einem Drucksystem zugewiesenen Druckaufträge 10 nach mindestens einem Sortierungskriterium 15 wie beispielsweise der Bedruckstoffbreite, Bedruckstoff-Grammatur, minimale Rüst- bzw. Stillstandszeiten, die schnellste Produktion diverser Druckaufträge 10, geringst mögliche Produktionskosten, möglichst wenige Wechsel des Bedruckstoffes und/oder der Falzart nach analysiert und nach den kleinsten aufeinanderfolgenden Abweichungen der Sortierungskriterien sortiert, so kann durch die geänderte Abfolge der Abarbeitung die Anzahl der Rüstvorgänge und somit die Rüst- bzw. Stillstandszeiten als auch der hierfür erforderliche Personalaufwand deutlich reduziert werden.

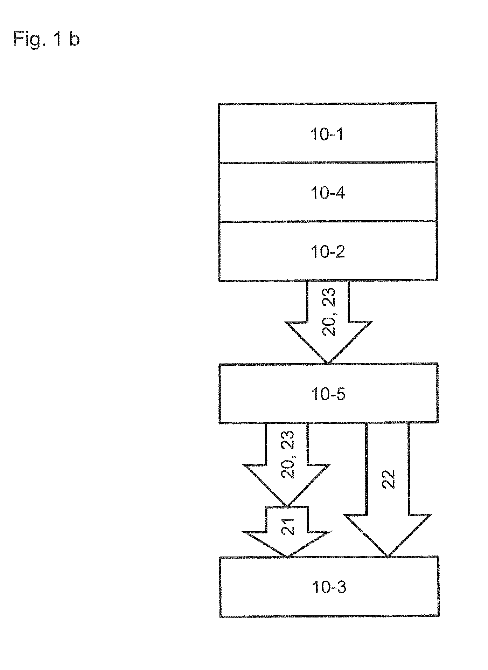

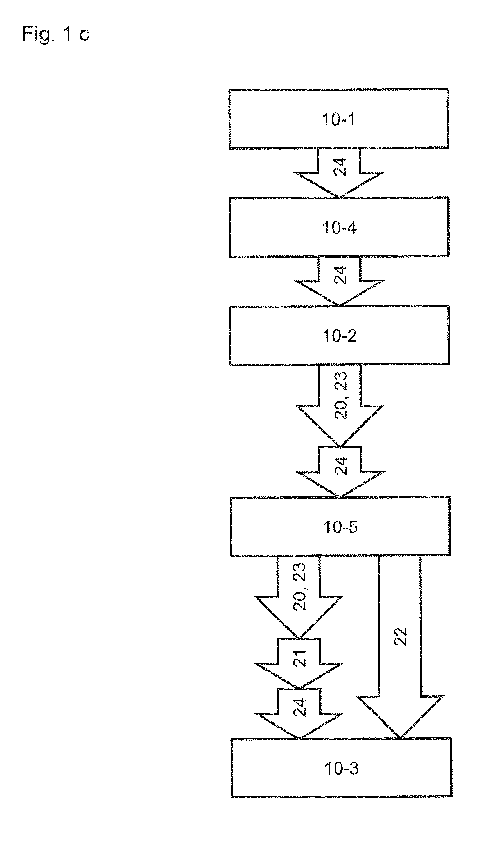

Fig. 1 b zeigt ein mögliches Ergebnis einer Sortierung nach diesen drei Sortierungskriterien für ein Druckform-variables Drucksystem. So können beispielsweise zuerst die Druckaufträge 10-1 und 10-4 aufgrund dergleichen Bahnbreite und Grammatur ohne Unterbrechung aufeinander folgend produziert werden - vorausgesetzt, das Falzwerk ist entsprechend konfiguriert.

Da der Druckauftrag 10-2 eine leicht abweichende Bahnbreite erfordert, wäre zwischen Druckjob 10-4 und 10-2 eigentlich ein Wechsel der Bedruckstoffbreite erforderlich.

Nach einer besonders vorteilhaften Ausgestaltung der Erfindung kann jedoch das zur Durchführung des erfindungsgemäßen Verfahrens erforderliche System auch in der Gestalt ausgeführt werden, dass bei bestimmten Veränderungen von Produktionsparametern 12 vorgeschlagen wird, diese jeweiligen Produktionsparameter 12 entsprechend anzupassen, um einen oder mehrere Rüstvorgänge zu vermeiden. Ein Beispiel hierfür ist die Bahnbreite: anstelle der für Druckjob 10-2 erforderlichen Bahnbreite von 820 mm kann vorgeschlagen werden, zur Vermeidung eines Wechsels der Bedruckstoffbreite 20 den bereits in der Maschine befindlichen breiteren Bedruckstoff mit einer Breite von 840 mm zu verwenden. Dies ist insbesondere dann interessant, wenn der wirtschaftliche Nachteil durch den dann erforderlichen Beschnitt kleiner ist, als der wirtschaftliche Nachteil durch einen zusätzlichen Rüstvorgang. Entsprechende Anpassungen können beispielsweise vorgenommen werden für die Bahnbreite, die Bedruckstoff-Grammatur oder die Bedruckstoffqualität, sofern sich dies mit den Kundenanforderungen vereinbaren lässt. Für eine derartige Lösung muss für die jeweiligen Sortierungskriterien hinterlegt werden, in welcher Richtung der aufeinanderfolgenden Produktionsparameter 12 und in welcher Abweichung des tatsächlichen Produktionsparameters zum ursprünglich vorgegebenen bzw. erforderlichen Produktionsparameters 12 eine entsprechende Änderung vorgeschlagen wird.

Nach Fertigstellung des Druckjobs 10-2 mit einer Bedruckstoffbreite von 840 mm ist zur nachfolgenden Produktion des Druckjobs 10-5 lediglich ein Wechsel der Bedruckstoffbreite 20 als auch eine Umstellung der Bedruckstoff-Grammatur 23, d. h. ein Wechsel des Bedruckstoffes erforderlich.

Nach Fertigstellung des Druckjobs 10-5 ist ein umfangreicherer Umrüstvorgang mit einem Wechsel der Bedruckstoffbreite 20, einem Wechsel der Bedruckstoffgrammatur 23, eine Umstellung des Falzwerkes mit Anpassung des Falzformates 21 als auch eine Umstellung der Farbigkeit 22 erforderlich, was sich jedoch aufgrund der geforderten Produktionsparameter 12 für den Druckjob 10-3 nicht vermeiden lässt.

Allerdings veranschaulicht bereits dieses Beispiel, dass durch entsprechende Sortierung von Druckjobs der Gesamtaufwand für Rüstvorgänge und somit von daraus resultierenden Stillstandszeiten des Drucksystems 1 deutlich reduziert werden kann.

Da eine entsprechende Analyse und Sortierung von Druckaufträgen 12 auch für Nicht-Druckform-variable Drucksysteme sinnvoll sein kann, insbesondere wenn es sich um ein sehr komplexes Drucksystem mit beispielsweise einer Vielzahl von Zusatzkomponenten wie Inline-Finishing-Aggregate wie Perforier- oder Lackwerke, Pflugfalzeinrichtungen etc. handelt und/oder eine Vielzahl von Druckaufträgen mit kleinen Auflagenhöhen gedruckt werden, ist in Fig. 1 c eine entsprechende optimierte Produktionsabfolge von Druckaufträgen 12 für ein Nicht-Druckformvariables Drucksystem dargestellt.

Dieses entspricht im Prinzip den auf Rüstzeiten hin optimierten Ablauf wie für das Druckform-variable Drucksystem 1, allerdings ist systembedingt bei Nicht-Druckform-variablen Drucksystemen vor einem neuen Druckauftrag 10 ein Druckformwechsel 24 erforderlich. Allerdings ist dieser bei modernen Nicht-Druckformvariablen Drucksystemen 1 zumeist automatisiert und führt nur zu kurzen Stillstandszeiten mit für den reinen Wechselvorgang nicht erforderlichem Personalaufwand.

Wie das Beispiel der Fig. 1a zeigt, kann abhängig von der Produktstruktur wie beispielsweise bei sehr ähnlichen Druckprodukten und/oder bei relativ einfacher Konfiguration eines Drucksystems 1 entweder eine Sortierung nach einem Sortierungskriterium 15 wie beispielsweise der Bahnbreite ausreichend sein. Auch wenn eine Sortierung einer Menge von Druckaufträgen 10 nur nach einem Sortierungskriterium erfolgt, so können für unterschiedliche Mengen von Druckaufträgen 10 dennoch immer wieder unterschiedliche Sortierungskriterien 15 erforderlich oder vorteilhaft sein.

Weißt die übliche Produktstruktur eines Drucksystems 1 jedoch sehr unterschiedliche Druckprodukte auf und/oder das Drucksystems weist einen sehr hohen Grad an Komplexität oder Variabilität auf, so kann eine Sortierung nach mehreren Sortierungskriterien 15 wie beispielsweise die Bedruckstoffbreite, die Grammatur, die Falzart, die Farbigkeit, das Endformat des Druckproduktes etc. erforderlich sein. Insbesondere bei derartig komplexen Produktstrukturen bzw. Sortierungskriterien kann eine effiziente manuelle Sortierung durch den Bediener oder den Disponenten eines Drucksystems nicht mehr sichergestellt werden, insbesondere wenn man bedenkt, dass moderne Druckform-variable Drucksysteme mehrere hundert Druckaufträge 10 pro Tag abarbeiten können und abhängig von der Komplexität des Drucksystems leicht 10 bis 20 verschiedene, wenn auch nicht immer gleichzeitig relevante Rüstzeit-relevante Produktionsparameter 12 zu betrachten sind.

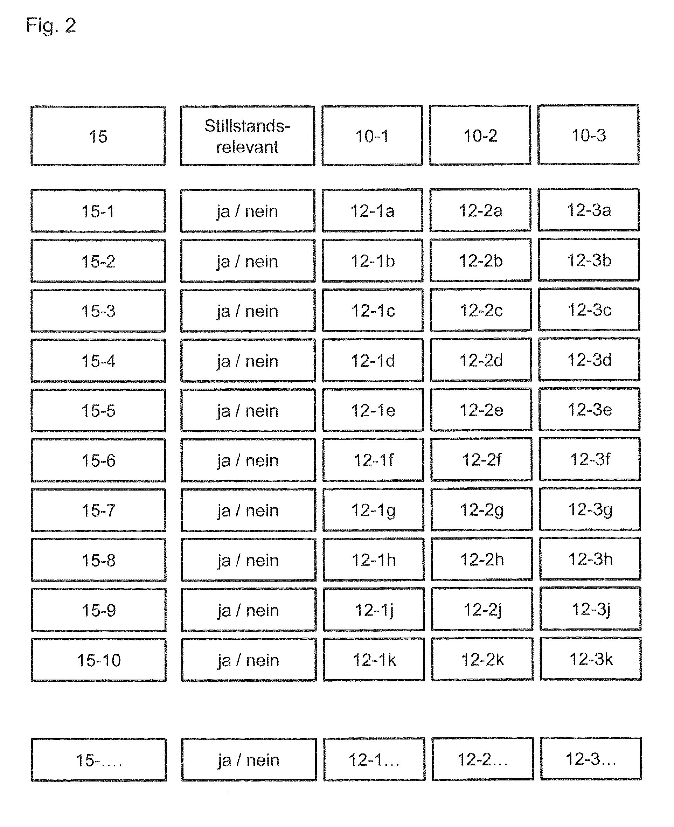

Zur Analyse und zur Sortierung werden die Druckauftragsdaten 11 der Druckaufträge 10 in ihre jeweiligen Produktionsparameter 12 aufgegliedert und zur Analyse beispielsweise in einer Matrix aufgespannt. Fig. 2 zeigt ein Ausführungsbeispiel einer entsprechenden beispielhaften Matrix.

In einer derartigen Matrix kann auch die Relevanz des jeweiligen Produktionsparameters 12 bzw. die Relevanz der Änderung des jeweiligen Produktionsparameters 12 zwischen aufeinanderfolgenden Produktionsparametern hinterlegt werden, beispielsweise dass die Bedruckstoffbahn ausgetauscht werden muss, wenn die nachfolgende Produktion eine größere Bahnbreite erfordert, als bei der vorhergehenden Produktion genutzt wird, oder dass ein Maschinenhalt mit Entfernen des Papiers aus dem Falzwerk erforderlich ist, wenn das Falzwerk beispielsweise von einem sogenannten Kreuzbruch auf einen Delta-Falz umgestellt werden muss.

Ferner kann in einer derartigen Matrix in einer besonders vorteilhaften Ausgestaltung der Erfindung auch hinterlegt werden, welche Produktionsparameter unter welchen Voraussetzungen zur Anpassung vorgeschlagen werden können, um zusätzliche Rüstgänge zu vermeiden. So kann beispielsweise für den Produktionsparameter "Bedruckstoffbreite" hinterlegt werden, dass für einen Druckauftrag 10 eine Anpassung auf eine größere Bahnbreite vorgeschlagen wird, wenn die Bedruckstoffbreite des vorhergehenden Druckauftrages 10 größer als die eigentlich für den betrachteten Druckauftrag erforderliche Bahnbreite ist. Ferner können hierbei auch Variationsräume definiert werden, dass beispielsweise die Verwendung einer größeren Bedruckstoffbreite nur dann vorgeschlagen wird, wenn diese nicht einen bestimmten prozentualen oder absoluten Betrag im Vergleich zur für den betrachteten Druckauftrag 10 geforderte Bedruckstoffbahnbreite überschreitet. So kann beispielsweise hinterlegt werden, dass die Verwendung einer breiteren Bahn als eigentlich erforderlich zur Vermeidung von Rüstvorgängen nur vorgeschlagen wird, wenn die Differenz der vorhergehenden Bahnbreite zur eigentlich erforderlichen Bahnbreite beispielsweise 10% der eigentlich geforderten Bahnbreite nicht übersteigt.

Zur Sortierung der Druckaufträge ist ferner mindestens ein Sortierungskriterium 15 erforderlich. Als Sortierungskriterien 15 können entweder bestimmte Produktionsparameter direkt ausgewählt werden, so dass beispielsweise die Druckaufträge 10 nach der Bahnbreite und/oder anderen Produktionsparametern sortiert werden. Es können aber als Sortierungskriterium 15 auch ein oder mehrere relevante Produktionsparameter zu einer Gruppe mit entsprechendem Kontext zusammengefasst werden.

Da in der Matrix optional wie oben beschrieben den jeweiligen Produktionsparametern ggf. eine Relevanz zugewiesen werden kann, beispielsweise, dass eine Änderung des Falzformates einen Maschinenstillstand bedingt, kann ein oder mehrere Stillstands-relevante Produktionsparameter zu einem Sortierungskriterium einer Stillstandsrelevanz zusammengefasst werden.

Sollen die zu analysierenden und zu sortierenden Druckaufträge 10 so sortiert werden, dass die Summe der Druckaufträge mit möglichst geringen Stillstandszeiten produziert werden, so können durch Anwählen dieses Sortierungskriteriums alle relevanten Produktionsparameter zur Sortierung aktiviert werden, wodurch vermieden wird, dass der Bediener die Aktivierung relevanter Produktionsparameter als Sortierungskriterium vergisst und somit nur ein suboptimales Resultat der Wirtschaftlichkeit erreichen würde.

In einer weiteren vorteilhaften Ausgestaltung der Erfindung kann mindestens ein derartiges Sortierungskriterium definiert und im Falle mehrerer definierter Sortierungskriterien kann das mindestens eine Sortierungskriterium aus einer Liste aller vordefinierter Sortierungskriterien ausgewählt werden. Vorteilhafterweise werden im Falle der Aktivierung mehrerer Sortierungskriterien diese auf Widersprüchlichkeit hin überprüft und im Falle einer festgestellten Widersprüchlichkeit von mindestens einem Sortierungskriterium wird eine Fehlermeldung angezeigt.

Da die Konfiguration des relevanten Drucksystems grundsätzlich veränderbar ist und insbesondere die dem Drucksystem nachgeschaltete Nachverarbeitung modifiziert, erweitert oder rekonfiguriert werden kann, ist in einer weiteren besonders vorteilhaften Ausgestaltung der Erfindung das mindestens eine Sortierungskriterium oder die Liste der vordefinierten Sortierungskriterien frei konfigurierbar, um diese auf Änderungen des Drucksystems oder der nachgeschalteten Nachverarbeitung anpassen zu können.

Teilweise sind bereits die Drucksysteme bestehend aus mindestens einer Zuführung für den Bedruckstoff, die Druckeinrichtung zum Aufbringen des Druckbildes auf den Bedruckstoff sowie eine Entsorgungseinheit beispielsweise in Form eines Wiederaufwicklers, Querschneiders oder Falzwerkes sehr komplex und weisen entsprechend viele Produktionsparameter 12 auf, insbesondere, wenn noch zusätzliche oder hoch komplexe Komponenten wie beispielsweise zusätzliche Beschichtungseinrichtungen, Inline-Veredelungs-Komponenten wie beispielsweise Perforier- oder Stanzeinrichtungen, Nummerierwerke, Drucksysteme für Personalisierungen wie beispielsweise Inkjet-Eindrucke etc. in das Drucksystem integriert sind, insbesondere wenn diese auch noch unterschiedliche Bahnführungen zulassen.

Allerdings ist jedoch einem derartigen Drucksystem eine teilweise ebenso komplexe Nachverarbeitung wie Sammel- bzw. Stapeleinrichtungen, Besäumeinrichtungen, Heft- bzw. Klebestationen, Verpackungsstationen etc. nachgelagert, bei der ebenfalls vielzählige und vielfältige Produktionsparameter 12 zu beachten sind. Teilweise sind diese Produktionsparameter 12 der Nachverarbeitungskomponenten auch Stillstands-relevant, d. h. eine Änderung der Produktionsparameter zweier aufeinanderfolgender Druckaufträge 10 kann einen Rüstvorgang und ggf. einen damit verbundenen Stillstand erforderlich machen, beispielsweise wenn diese Komponenten auf ein neues Format bzw. eine neue Größe eines Druckproduktes eingestellt werden müssen oder wenn für gewisse Funktionen Justagen auf das entsprechende Produkt vorgenommen werden müssen, wie dies beispielsweise bei Hefteinrichtungen der Fall sein kann.

Da jedoch bei einer Optimierung von Abläufen oder beispielsweise der Wirtschaftlichkeit nur eine Betrachtung des gesamten zur Produktion des jeweiligen Druckproduktes erforderlichen Komponentenverbundes bestehend aus Drucksystem und nachgelagerter Nachverarbeitung sinnvoll und nachhaltig ist, wird in einer besonders vorteilhaften Ausgestaltung der Erfindung die dem Drucksystem zugehörige mindestens eine Nachverarbeitung bzw. Nachverarbeitungslinie sowie deren Nachverarbeitungs-Produktionsparameter 12 mit in die Bewertung der Produktionsparameter und in die Sortierung der jeweiligen Druckaufträge 10 mit einbezogen.

Die vorliegenden Beispiele zeigten allesamt eine Optimierung nach Rüstzeitrelevanten Sortierungskriterien wie Verkürzung der Stillstandszeiten, Vermeidung von unnötigen manuellen Umrüstvorgängen etc., da Umrüstvorgänge die Verfügbarkeit des zur Herstellung eines Druckproduktes erforderliche Equipment herabsetzen, teilweise einen hohen Personalbedarf erforderlich machen und somit beispielsweise auch die Fehlerquote erhöhen oder auch einen zusätzlichen Zeit- und Materialbedarf für Einrichtvorgänge bedeuten.

Somit ist eine besonders vorteilhafte Ausgestaltung der vorliegenden Erfindung, dass die Reihenfolge der Druckaufträge nach mindestens einem Rüstzeitrelevanten Sortierungskriterium wie minimale Stillstandszeiten des Drucksystems, möglichst wenige Wechsel des Bedruckstoffes etc. hin optimiert wird.

Allerdings können insbesondere bei Drucksystemen, bei denen zu einem hohen Anteil Druckprodukte in Kleinstauflagen, d. h. Auflagenhöhen von ca. 5 bis 50 Druckexemplaren oder beispielsweise Druckprodukte mit personalisiertem, d. h. kundenspezifisch gestalteten Druckinhalten wie zum Beispiel auf ein spezielles Geschäft oder Filiale bezogene Werbeprospekte, Broschüren oder aber eine spezifische Anzahl von Zeitschriften oder Zeitungen pro Kiosk oder sonstiger Verkaufs- oder Auslegestelle die Aufwände und somit die Kosten für die Logistik, die Disposition und den Versand einen erheblichen Anteil am Gesamtprozess bzw. den Gesamtkosten oder auch der erforderlichen Zeitstrecke von der Produktion bis zum Versand ausmachen. Ferner müssen bei einem derartigen Produktionsspektrum und unterschiedlichen oder unterschiedlich langen Versandstrecken auch die Lieferzeiten entsprechend sensibel und präzise beachtet werden.

Dieses Beispiel zeigt, dass neben den rein Stillstands-relevanten Sortierungskriterien auch anderweitige, teilweise nicht rein auf das Drucksystem bezogene Sortierungskriterien relevant sind bzw. sein können.

Somit wird nach einer weiteren vorteilhaften Ausgestaltung der Erfindung die Reihenfolge der dem betrachteten Drucksystem als auch optional der dem Drucksystem nachgeordneten Nachverarbeitung zugewiesenen Druckaufträge nach mindestens einem Sortierungskriterium der Logistik wie beispielsweise der aufeinanderfolgenden Produktion aller einem spezifischen Kunden zugehörigen Produkte sortiert werden.

Im Faller derartiger Sortierungskriterien versteht es sich von selbst, dass bei derartigen Anforderungen oder Sortierungskriterien kundenbezogene oder die Logistik betreffende Daten mit in die Produktionsparameter 12 der jeweiligen Druckaufträge 10 aufgenommen werden müssen.

Derartige unterschiedliche Sortierungskriterien müssen sich nicht grundsätzlich widersprechen, allerdings können zu viele Sortierungskriterien einen Sortierungsprozess zum Erliegen bringen. Aus diesem Grund können vorteilhafterweise bei der Auswahl von mehreren Sortierungskriterien diese in ihrer Relevanz priorisiert werden.

Da eine Analyse von Produktionsparametern 12 und die damit mögliche Sortierung von Druckaufträgen 10 unabhängig vom Druckverfahren, Bedruckstoffen oder Anwendungen ist, versteht es sich von selbst, dass das erfindungsgemäße Verfahren zum Sortieren von Druckaufträgen sowohl für Druckform-variable Druckverfahren, wie beispielsweise dem Inkjet-Verfahren oder beispielsweise tonerbasierten Digitaldruckverfahren als auch für Nicht-Druckform-variable Druckverfahren wie beispielsweise dem Offset-Druck, dem Tiefdruck, dem Hochdruck, dem Flexodruck etc. anwendbar ist und für alle und all die vorgenannten Druckverfahren auch sowohl für Bogen- und/oder Rollen-verarbeitenden Drucksystemen anwendbar ist.

Ferner ist zur Umsetzung dieses erfindungsgemäßen Verfahrens eine Vorrichtung in Form einer Steuerungs- oder Rechenvorrichtung unerlässlich, welche ebenfalls Bestandteil der vorliegenden Erfindung ist.

### Bezugszeichenliste

- 1: Drucksystem

- 10: Druckauftrag
- 11: Druckauftragsdaten
- 12: Produktionsparameter

- 15: Sortierungskriterium

- 20: Wechsel Bedruckstoffbreite
- 21: Umstellung Falzwerk bzw. Falzformat
- 22: Umstellung Farbigkeit
- 23: Umstellung Grammatur Bedruckstoff
- 24: Druckformwechsel bei Nicht-Druckform-variablen Drucksystemen

## Patentansprüche

1. Verfahren zum Optimieren der Produktionsabläufe von einer Mehrzahl einem Drucksystem zugewiesenen Druckaufträgen, **dadurch gekennzeichnet, dass** die dem Drucksystem zugewiesenen Druckaufträge in ihrer Reihenfolge und somit der Abfolge der Abarbeitung hinsichtlich mindestens eines Sortierungskriteriums automatisiert geordnet werden.

2. Verfahren nach Anspruch 1, **dadurch gekennzeichnet, dass** die dem Drucksystem zugewiesenen, durch eine Mehrzahl von Druckauftragsdaten definierten Druckaufträge zur Sortierung nach mindestens einem Produktionsparameter hin analysiert und bewertet werden.

3. Verfahren nach Anspruch 1 oder 2, **dadurch gekennzeichnet, dass** die Druckauftragsdaten zur Analyse und Bewertung in ihre Produktionsparameter wie beispielsweise Bedruckstoffbahnbreite, Bedruckstoffformat, Bedruckstoffart, Farbprofil, Farbigkeit, Falzart etc. zerlegt werden.

4. Verfahren nach Anspruch 1, **dadurch gekennzeichnet, dass** das mindestens eine Sortierungskriterium aus einer Liste vordefinierter Sortierungskriterien wählbar ist.

5. Verfahren nach Anspruch 4, **dadurch gekennzeichnet, dass** das mindestens eine Sortierungskriterium oder die Liste der vordefinierten Sortierungskriterien frei konfigurierbar ist.

6. Verfahren nach einem der vorhergehenden Ansprüche, **dadurch gekennzeichnet, dass** die dem Drucksystem zugehörige mindestens eine Nachverarbeitungslinie sowie deren Nachverarbeitungs-Produktionsparameter in die Bewertung der Produktionsparameter und die Sortierung der jeweiligen Druckaufträge mit einbezogen wird.

7. Verfahren nach einem der vorhergehenden Ansprüche, **dadurch gekennzeichnet, dass** die Reihenfolge der Druckaufträge nach mindestens einem Rüstzeit-relevanten Sortierungskriterium wie minimale Stillstandszeiten des Drucksystems, möglichst wenige Wechsel des Bedruckstoffes etc. hin optimiert wird.

8. Verfahren nach einem der Ansprüche 1 bis 6, **dadurch gekennzeichnet, dass** die Reihenfolge der dem Drucksystem zugewiesenen Druckaufträge nach mindestens einem Sortierungskriterium der Logistik wie beispielsweise der aufeinanderfolgenden Produktion aller einem spezifischen Kunden zugehörigen Druckprodukte sortiert werden.

9. Verfahren nach einem der vorhergehenden Ansprüche, **dadurch gekennzeichnet, dass** bei Auswahl einer Mehrzahl von Sortierungskriterien diese in ihrer Relevanz priorisiert werden können.

10. Verfahren nach einem der vorhergehenden Ansprüche, **dadurch gekennzeichnet, dass** dieses für Bogen- und/oder Rollen-verarbeitende Drucksysteme anwendbar ist.

11. Verfahren nach einem der vorhergehenden Ansprüche, **dadurch gekennzeichnet, dass** dieses für Nicht-Druckform-Variable und/oder für Druckform-Variable Drucksysteme anwendbar ist.

12. Verfahren nach einem der vorhergehenden Ansprüche, **dadurch gekennzeichnet, dass** eine Anpassung von Produktionsparametern für relevante Druckaufträge vorgeschlagen oder abgeändert wird, so dass die dem Drucksystem zugewiesenen Druckaufträge in ihrer Reihenfolge und somit der Abfolge der Abarbeitung hinsichtlich mindestens eines Sortierungskriteriums nochmals zusätzlich optimiert werden, beispielsweise durch zusätzliche Reduzierung der Rüstvorgänge und/oder durch zusätzliche Optimierung der Logistik.

13. Vorrichtung zur Durchführung eines Verfahrens nach einem der Ansprüche 1 bis 12.
